Europäisches Patentamt

(19) European Patent Office

Office européen des brevets

(11) Publication number: **0 204 059**

A1

## (12) EUROPEAN PATENT APPLICATION

(21) Application number: **85850195.0**

(22) Date of filing: **03.06.85**

(51) Int. Cl.⁴: **F 23 C 9/00**
**F 23 B 1/14, F 23 L 7/00**
**//F23C6/04, F23B5/04, F23L17/16**

(43) Date of publication of application:
**10.12.86 Bulletin 86/50**

(84) Designated Contracting States:
**AT BE CH DE FR GB IT LI LU NL**

(71) Applicant: **SSAB Svenskt Stal AB**
**Box 163 44**
**S-103 26 Stockholm(SE)**

(72) Inventor: **Andersson, Sven Göran**
**Tvärgatan 16**
**S-781 32 Borlänge(SE)**

(72) Inventor: **Norberg, Per-Olof**
**BjuggGörans väg 55**
**S-781 65 Borlänge(SE)**

(74) Representative: **Wärulf, Olov**
**Svenkst Stal**
**S-613 01 Oxelösund(SE)**

(54) **Method to control a combustion progress.**

(57) Combustion of solid, liquid and gaseous matters in combustion chamber (9) with primarily oxygen as oxidizer fed through pipe (5), at which also recirculated products of combustion are added by a pipe (4) to the process.

The object of the combustion can be pure heat generation, but also to produce fuel gases or so called process gases such as oxidizing or reducing protective gases, etc.

FIG 1

Croydon Printing Company Ltd.

METHOD TO CONTROL A COMBUSTION PROGRESS

TECHNICAL AREA:

The present invention relates to a method to control the combustion progress at combustion of solid, liquid and gaseous matters with primarily oxygen as oxidizer. A better efficiency and cleaner exhaust gases are among other things obtained through this invention. This invention also makes it possible to control the combustion progress, so that materials destruction in surrounding material is reduced and that the composition of gases can be optimized from the point of view of heat transfer. The aim of the combustion can be pure heat generation, but also to make fuel gases or so called process gases such as oxidizing or reducing protective gases.

BACKGROUND TECHNOLOGY:

At combustion processes the most common oxidizer is air. Air consists of 21% oxygen and the rest is mainly nitrogen. Normally, the nitrogen has no specific function at the very combustion, but instead causes losses, when the waste gas is discharged through the chimney. However, by being present the nitrogen acts as a dampening and equalizing factor on the heat generation and transports the heat generated as well.

To increase the capacity of the re-heating furnaces for example, a technique to enrich the combustion air with oxygen has lately been put into practice. Through this, the volume of nitrogen is reduced and so the loss of waste gas at the same time as the heat exchange between gas and flame and boiler or furnace increases. For different reasons e.g. high fire hazard, burners which do not suit for oxygen enrichment etc the upper limit for oxygen enrichment is about 40%. A disadvantage in connection with oxygen enrichment and which has not yet been discussed is that the discharges of nitric oxides increase. Therefore, in future it may be that official actions will limit the possibilities to oxygen enrichment.

In connection with combustion processes attempts have been made to go the whole way and by and large only use oxygen as oxidizer. The result of this has in most cases been unsurmountable obstacles, as the heat release has become so intense that burner as well as surrounding parts of the combustion chamber have not been able to resist the strains on the material.

When oxygen enrichment is carried out to save fuel the lower loss of exhaust gas shall be put in relation to the production cost for oxygen which is closely associated with the price of electricity. The existing price development in Sweden for oil, LP-gas and coal as well as for biofuels and motor fuels in relation to electrical energy makes oxygen enrichment more and more interesting. There is also an interest in producing other gases, fuel gases or so called process gases such as i.a. protective gases, oxidizing and reducing gases by means of oxygen-enriched air or solely oxygen.

In this connection there are also other wishes; namely, to utilize products which are very difficult to burn up, such as black liquour from the pulp mills. Such products require a high flame temperature and possibly several combustion turns to obtain a more complete combustion and an acceptable exhaust gas composition.

## SUMMARY OF THE INVENTION

The object of this invention is to control the combustion progress, to obtain:

1. higher efficiency
2. desired flame temperature
3. cleaner exhaust gases
4. optimum composition for generated gases from the point of view of heat transfer
5. appropriate composition for generated gases, so as to make them suitable as fuel gases and process gases
6. desired gas temperature
7. optimum utilization of fuels, which are difficult to burn.

According to this invention this control is achieved through the use of oxygen as oxidizer at the combustion. Pure oxygen or oxygen more or less mixed with air and a certain volume of recirculating exhaust gases - uncleaned or more or less cleaned - take part in the process at the combustion of the fuel. The combustion can take place in one or several steps.

The invention will be closer described in the enclosed claims, the following text paragraphs and examples as well as by means of the figures enclosed as follows:

Fig. 1 and 2 schematically show a furnace meant for heating of steel semis

Fig. 3 also schematically shows a plant for combustion in 2 steps.

## DETAILED DESCRIPTION OF THE INVENTION

From the point of view of energy, environment as well as capacity, advantages are obtained, if the volume of nitrogen in the air completely or partly is replaced by recirculating waste gas. To this oxygen must be added in an volume appropriate to the application, whereby two methods can be applied. With an air-combustion equipment of conventional design and the fire hazard involved the recirculation of waste gases must not be so low that the concentration of oxygen exceeds 40%. With oxygen burners the recirculation of combustion gases is completely free and can be adapted to all operating conditions.

Oxygen enrichment and higher initial temperature for the gases participating in the process also give rise to higher flame temperatures. Therefore, the flame temperature is dependent on the recirculation degree of the waste gases. To protect the burner, but also to protect and efficiently utilize the combustion room a minimum permissible recirculation degree can be fixed. This can also be set so high that the volume of oxygen is lower than the normal volume in air, 21%, without prejudice to the total energy consumption. This means that the temperature, either it is necessary or desirable, in certain cases can be adjusted to be as low as at normal combustion or even lower.

The above degrees of freedom as for e.g. flame temperature, waste gas composition, recirculation degree and the volume of oxygen added can be utilized to increase the capacity area for existing plants with maintained energy effectivity. As for new plants the proposed invention can similarly imply good possibilities to design combustion plants at lower investment costs than before.

In the combustion technique development is always going on and attempts are made to design burners which can both meet the environmental requirements and possess necessary combustion properties. Works done up till now show that it is very difficult to fulfil both of them at the same time. By recirculation of waste gases to a desired extent a simpler development towards considerably better combustion properties is obtained and furthermore, e.g. the soot generation in different burner constructions will be simpler to master.

The method in itself involves a purification and possibility to a more efficient burning-out of the fuel, as the products of combustion - which can be exhaust gases as well as a combustible gas generated in the installation - pass through the combustion unit as many times as one desires. Hereby the generation of soot, ash, etc and the ash melting point of solid fuels can be simpler mastered. This is especially important at complete combustion or partial gasification of e.g. fuels, when the installation, e.g. a furnace, where the final combustion shall take place, requires a slightly polluted gas. Through recirculation over a preparatory, primary combustion step a combustion is obtained, which is more energy-saving and more environment-positive.

The conversion of oil, LP-gas, etc into domestic fuels or cheaper fuels such as coal, biofuels, waste oils and by-products from the cellulose and steel industries such as crude tall oil, lignin, tar and black liquor, is very much facilitated with maintained energy and environmental quality.

Very high waste gas temperatures can be a problem to the components of a combustion installation. Today there are commercial waste gas fans for a temperature of about 670°C with sufficient capacity. With ejector drive considerably higher temperatures can be mastered. The waste gas temperature is dependent on the recirculation degree of the waste gas. It can be adjusted as desired, which means that too high waste gas temperatures can be avoided, when necessary. However, if any process would provide a too high waste gas temperature it can be handled e.g. through the installation of a cooling unit, type waste gas boiler, to decrease the temperature to a suitable value before the waste gas passes through the drive.

To avoid that dust is enriched in the waste gas a cyclone can be installed in the recirculation pipe. Another method is to reduce the speed of the waste gas through increasing the cross-section area in a certain place, so that the floating dust falls from the waste gas by itself.

The environmental problems in connection with oil combustion are discharges of $SO_2$, $CO_2$, nitric oxides and heavy metal pollutants. The total amount of pollutants formed decreases according to the invention due to the lower specific fuel consumption. At higher flame temperature the generation of nitric oxides increases. Oxygen-enriched combustion air therefore aggravates the environmental problems. Through the utilization of the invention the presence of nitrogen at the combustion is limited or eliminated, so even this problem can be mastered.

When waste gas circulation according to the invention is used the waste gas volume will be 17-20% of the waste gas volume at conventional combustion with air. The size of a preheater for waste gas can be 1/5 of that of a comparable heat exchanger at combustion with solely air. A heat exchanger for oxygen should be made of acid-resisting, stainless material with regard to the low waste gas temperature and due to the fact that oxygen is heated. The small dimensions of heat exchangers and chimneys decrease the investment costs at new plants in comparison to already existing plants. The possibilites to clean and condense environmentally dangerous matters in outgoing waste gases completely or partly with catalyzers and/or coolers will be more efficient and cheaper in comparison with the equipment for environmental protection now in use.

EXAMPLE 1

Steel semis, which are 12 m long and have a square cross-section with side 120 mm, shall be heated to about 1250°C at a rate of 50 tons/h and then be rolled to steel sections.

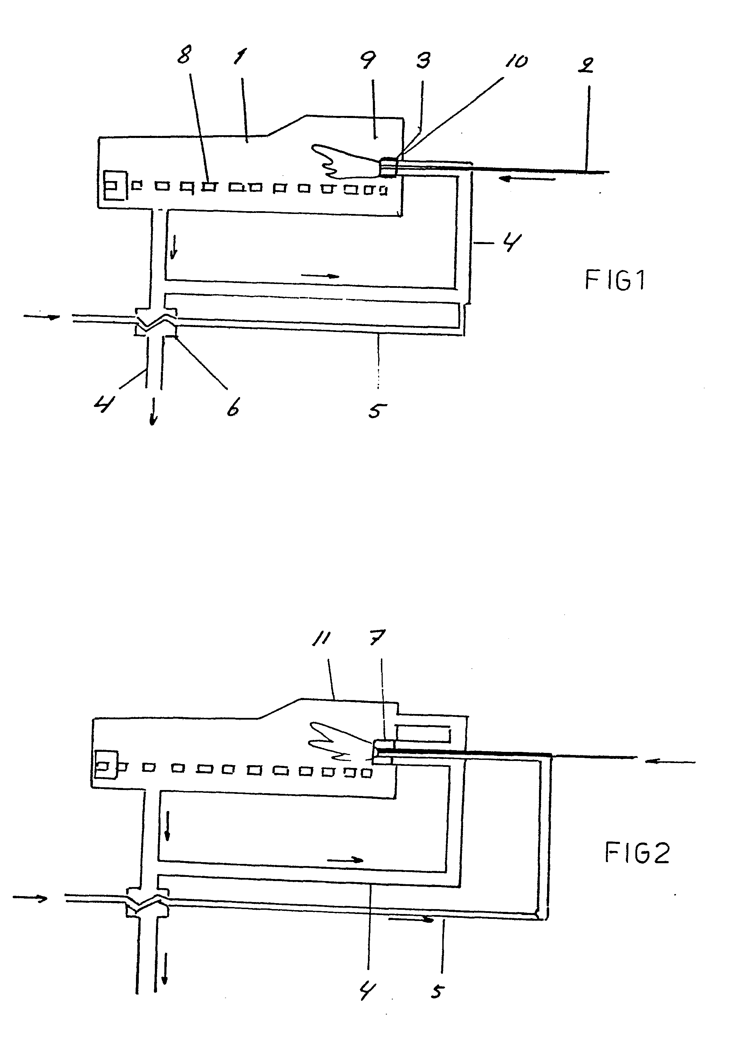

The semis, 8, are transversally moved in a horizontal plane through a pusher furnace, 1, the gable-end, 10, of which is provided with 10 oil burners at the outlet opening (Fig. 1). In the combustion room, 9, outside the nozzle of the burners (3) about 1600 lit. oil/h is burnt. The oil is fed through an oil pipe, 2, to conventional oil burners, 3. About 80% of the waste gases at the inlet opening of the furnace is recirculated through the waste gas pipe, 4, to the burners, 3. Only oxygen is used as oxidizer and it is fed to the burners, 3, after it has first been preheated in a heat exchanger, 6, by the outgoing waste gases over an oxygen pipe, 5, which discharges into the waste gas pipe, 4, where it is mixed with the recirculating waste gases.

At the heating of the steel semis, 8, the below values were obtained:

| | |
|---|---|
| Production rate | 56,8 tons/h |
| Energy in oil | 11 Kwh/lit. |
| " in semis | 240 Kwh/ton |
| " in scales produced | 33 Kwh/ton |
| Furnace losses and others | 80 Kwh/ton |
| Oil consumption per ton heated semis | 27 lit./ton |

The effect of this procedure in relation to that one earlier used is higher efficiency, increased furnace capacity i.a. achieved through a more advantageous waste gas composition from the point of view of heat transfer and through less and cleaner waste gases.

EXAMPLE 2

At this procedure the same furnace (Fig. 2) is used as in example 1 (Fig. 1). In example 2 the combustion room, 9, of the furnace has instead been furnished with an oxygen burner to which oil is fed over an oil pipe, 2. The oxygen is here fed direct to the oxygen burner, 7, over the oxygen pipe, 5. If the distribution and volume of recirculated waste gas is led around the oxygen burner, 7, or under the furnace arch, 11, the material in these parts will be able to resist the strains.

Rate of production, energy in oil, energy in semis and scales as well as furnace losses were almost identical with the values mentioned in example 1.

The composition of the waste gas in percentage by volume (below the dissociation temperature) at combustion of oil according to both examples is as follows when compared with normal combustion with air:

|  | $CO_2$ | $H_2O$ | $O_2$ | $SO_2$ | $N_2$ |
|---|---|---|---|---|---|
| Combustion with oxygen and waste gas recirculation | 55.4 | 44 | – | 0.6 | – |
| Normal combustion | 14 | 11 | 2-4 | 0.15 | 71 |

The radiation properties of the waste gas increase at the same rate as the content of $CO_2$ and $H_2O$ increases.

Heating curves for steel semis, 8, in the furnace (Fig. 2) are shown in enclosed diagram 1. Curve A is for normal combustion with air as oxidizer, curve B is for combustion with an oxygen burner, 7, without waste gas recirculation, and curve C is for combustion with waste gas recirculation. At this, the speed and emissivity of the gas have been changed, whereas the zone temperature has remained constant.

The higher emissivity of the gas provides about 12°C higher mean temperature for the semis, 8, under conditions which are identical in other respects. The waste gas recirculation increases the mean temperature by further 7°C at a recirculation degree of 3.76 (the same waste gas speed as at combustion with air). The specific heat of the waste gas also increases, when the nitrogen is confined.

The waste gas heat is utilized in the heat exchanger, 6, down to 200°C, to preheat the oxygen added.

At combustion of 1 lit. oil 2.17 $Nm^3$ of oxygen is required giving 2.80 $Nm^3$ of waste gases. As possibly unburnt oxygen several times participates in the combustion at waste gas recirculation the surplus oxygen normally required can be left out of account. When air is used for decomposition of oil the waste gas flow increases by about 0.5 $Nm^3$/lit. oil.

EXAMPLE 3

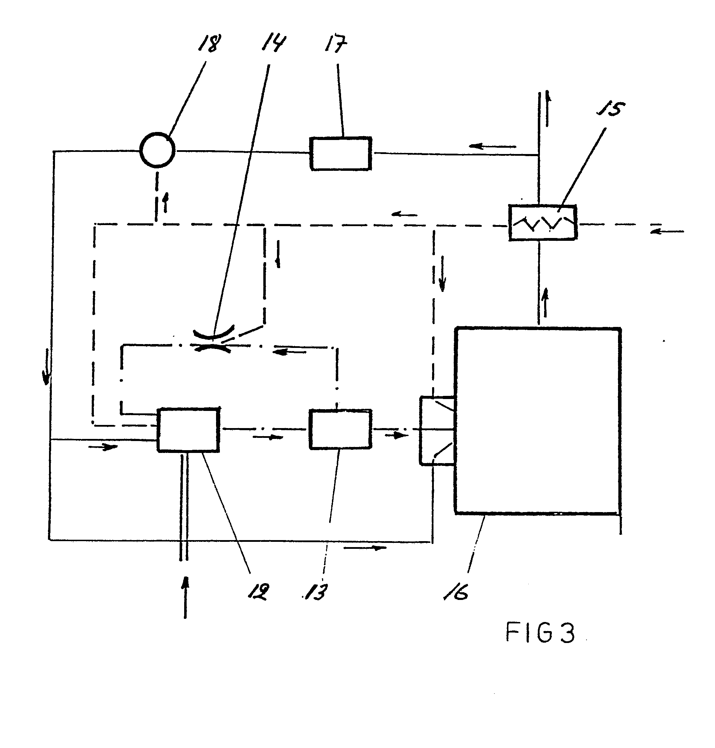

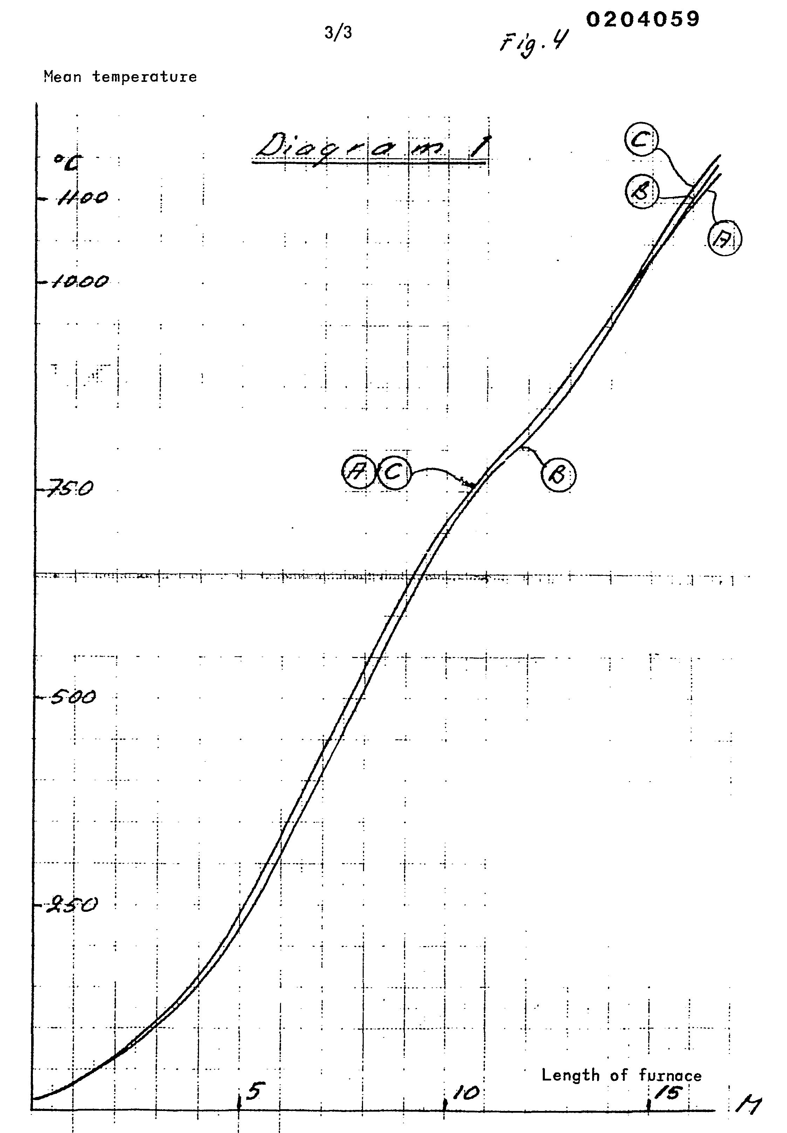

The invention is intended for use at a combustion process, where the products of combustion of the energy raw material must be cleaned from e.g. ash, soot or slag, before they arrive at the final combustion room of the process, Fig. 3. The installation is mainly used for solid fuels or in connection with gasification. As required the cleaning can be made in multiples or in several successive steps. Final products of combustion can be gases with as well as without chemical heat content.

By means of ejector drive of the gases very high temperatures can be treated without difficulties.

In a first combustion unit, 12, a partial combustion is made of a fuel, such as coal, oil, biofuels or cellulose by-products. The oxidizer can either be pure oxygen or oxygen more or less mixed up with air. The waste gases from this are first led to a cleaning unit, 13, for e.g. ash and soot. As required the waste gases are led back to the first combustion unit, 12, for repeated oxidation. This circulation is achieved through an ejector, 14, which is driven by the oxidizer added to the first combustion unit, 12. This oxidizer has been preheated in a heat exchanger, 15, by gases giving off from the process. Part of the waste gases from the cleaning unit, 13, is then burnt in a second combustion unit, 16, either with pure oxygen or oxygen mixed with air, which also has been preheated in the earlier mentioned heat exchanger, 15. Parts of the generated waste gases from the second combustion unit, 16, can after cleaning, if any, in a second cleaning unit, 17, be reled to the first combustion unit, 12, as well as to the second combustion unit, 16, to participate in the control of the combustion processes concerned. Because it is advantageous to cool down the recirculated waste gases in the heat exchanger, 15, a fan, 18, kan be used for the recirculation.

PATENT CLAIMS

0204059

1 Method to control combustion progress, composition
of gases produced, heat transfer phenomena, efficiency,
generation of nitric oxides and to create the necessary
conditions for reduced strains on material and an
efficient cleaning of outgoing products of combustion
at combustion of solid, liquid or gaseous matters
c h a r a c t e r i z e d  in that recirculated products
of combustion in a proportion suitable for the process
are added to the combustion, which in itself is maintained
by means of addition of oxygen and air as oxidizer.

2. Method according to claim 1 c h a r a c t e r i z e d
in that the oxygen is mixed up with recirculated products
of combustion before the combustion process.

3. Method according to claim 1 c h a r a c t e r i z e d
in that the oxygen is mixed up with the fuel before the
combustion process.

4. Method according to claims 1-3 c h a r a c t e r-
i z e d in that the fuel is oxidized in an oxygen burner
and that recirculated products of combustion are then
added to the process.

FIG1

FIG2

FIG 3

Fig. 4

Mean temperature

Diagram 1

°C
− 1100

− 1000

− 750

− 500

− 250

Length of furnace

5          10          15          M

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | PATENTS ABSTRACTS OF JAPAN, vol. 1, no. 46 page 79 M 77, 6th May 1977; & JP - A - 52 1632 (HAIBIRUKA K.K.) 01-07-1977 | 1-4 | F 23 C 9/00<br>F 23 B 1/14<br>F 23 L 7/00 //<br>F 23 C 6/04<br>F 23 B 5/04<br>F 23 L 17/16 |
| X | EP-A-0 038 257 (UNION CARBIDE)<br>* Page 1, line 1 - page 4, line 12; page 6, lines 8-16; page 8, lines 1-22; page 9, lines 14-27; page 10, lines 3-15; page 14, lines 4-27; figures 3a,b * | 1,2 | |
| X | US-A-4 055 334 (STEPHENS)<br>* Abstract; column 1, lines 35-68; column 2, line 41 - column 3, line 40; figure * | 1-4 | |
| X | EP-A-0 141 594 (AIR PRODUCTS AND CHEMICALS)<br>* Abstract; figure 1 * | 1,2 | TECHNICAL FIELDS SEARCHED (Int. Cl.4)<br><br>F 23 C<br>F 23 B<br>F 23 L |
| X | FR-A-1 587 944 (MAIR)<br>* Page 6, lines 7-22,43,44; figure 1 * | 1,2 | |
| A | US-A-4 488 869 (VOORHEIS) | | |
| A | US-A-3 958 915 (NODA) | | |
| | --- -/- | | |

The present search report has been drawn up for all claims

| Place of search | Date of completion of the search | Examiner |
|---|---|---|
| THE HAGUE | 05-02-1986 | PHOA Y.E. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int Cl 4) |
|---|---|---|---|
| A | FR-A- 554 232 (BROWN, BOVERI) | | |
| A | DE-A-2 813 609 (CALORIC) | | |

TECHNICAL FIELDS SEARCHED (Int. Cl 4)

The present search report has been drawn up for all claims

| Place of search | Date of completion of the search | Examiner |
|---|---|---|
| THE HAGUE | 05-02-1986 | PHOA Y.E. |

EPO Form 1503 03 82